# EUROPÄISCHE PATENTSCHRIFT

(11) **EP 2 379 407 B1**
(45) Veröffentlichungstag und Bekanntmachung des Hinweises auf die Patenterteilung: **01.05.2013**
(21) Anmeldenummer: 10700960.7
(22) Anmeldetag: 21.01.2010
(51) Int. Cl.: B64D 11/04, A47B 47/00

(54) **FLUGZEUGBORDKÜCHE MIT EINEM TRENNPLATTENSYSTEM**
AIRCRAFT GALLEY HAVING A PARTITION PANEL SYSTEM
CUISINE DE BORD POUR AVION ÉQUIPÉE D'UN SYSTÈME DE PLAQUES DE SÉPARATION

(30) Priorität: 21.01.2009 DE 102009005478; 21.01.2009 US 146210 P
(43) Veröffentlichungstag der Anmeldung: 26.10.2011
(73) Patentinhaber: Airbus Operations GmbH, 21129 Hamburg (DE)
(72) Erfinder: PANGALILA, Iwan, 22607 Hamburg (DE)
(74) Vertreter: Schicker, Silvia
(86) Internationale Anmeldenummer: PCT/EP2010/000352
(87) Internationale Veröffentlichungsnummer: WO 2010/084005

(56) Entgegenhaltungen:
- WO-A1-01/21963
- DE-U1- 29 515 467
- US-A1- 2008 169 740

## Beschreibung

Die vorliegende Erfindung betrifft eine Flugzeugbordküche mit einem Trennplattensystem zur Unterteilung eines Grundkörpers der Flugzeugbordküche in eine Mehrzahl von Fächern. Ferner betrifft die Erfindung ein Verfahren zur Montage einer derartigen Flugzeugbordküche.

Aus der WO 2007/096000 A1 ist eine modular aufgebaute Flugzeugbordküche bekannt, die einen in eine Mehrzahl von Fächern unterteilten Grundkörper umfasst. In den Fächern des Grundkörpers sind verschiedene Geräte, wie z.B. ein Ofen oder ein Mikrowellengerät angeordnet. Ferner sind in den Fächern des Grundkörpers Boxen aufgenommen, in denen zur Versorgung der Passagiere an Bord des Flugzeugs benötigte Serviceprodukte, wie z.B. Nahrungsmittel oder Getränke untergebracht werden können. Aus der US 2008/0169740 ist eine Bordküche be kannt, bei den eine Wandplatte havaunsuchimbar ist.

Der Erfindung liegt die Aufgabe zugrunde, eine Flugzeugbordküche mit einem Grundkörper bereitzustellen, der mittels eines leichtgewichtigen und einfach montierbaren Trennplattensystems in eine Mehrzahl von Fächern unterteilt ist. Ferner liegt der Erfindung die Aufgabe zugrunde, ein Verfahren zur Montage einer derartigen Flugzeugbordküche anzugeben.

Diese Aufgabe wird durch eine Flugzeugbordküche mit den Merkmalen des Anspruchs 1 sowie ein Verfahren zur Montage einer Flugzeugbordküche mit den Merkmalen des Anspruchs 11 gelöst.

Eine erfindungsgemäße Flugzeugbordküche umfasst einen Grundkörper, der mittels eines Trennplattensystems in eine Mehrzahl von Fächern unterteilt ist. Der Grundkörper der Flugzeugbordküche kann beispielsweise quaderförmig ausgebildet sein. Das Trennplattensystem umfasst eine erste Trennplatte sowie eine zweite Trennplatte. In der ersten Trennplatte ist mindestens ein Montageschlitz ausgebildet, der sich von einem ersten Rand der ersten Trennplatte in Richtung eines Innenbereichs der ersten Trennplatte erstreckt. Der in der ersten Trennplatte ausgebildete Montageschlitz nimmt einen Montageabschnitt der zweiten Trennplatte auf. Die Form und die Breite des in der ersten Trennplatte ausgebildeten Montageschlitzes ist vorzugsweise an die Dicke der zweiten Trennplatte im Bereich ihres Montageabschnitts angepasst. Der in der ersten Trennplatte ausgebildete Montageschlitz und der Montageabschnitt der zweiten Trennplatte sind so gestaltet, dass Hauptoberflächen der ersten Trennplatte im wesentlichen senkrecht zu Hauptoberflächen der zweiten Trennplatte ausgerichtet sind.

Der in der ersten Trennplatte ausgebildete Montageschlitz wird vorzugsweise von zwei Seitenflächen begrenzt, die sich im wesentlichen senkrecht zu den Hauptoberflächen der ersten Trennplatte erstrecken. Mindestens eine der Seitenflächen des in der ersten Trennplatte ausgebildeten Montageschlitzes trägt eine erste Führungseinrichtung. Die erste Führungseinrichtung wirkt mit einer komplementären zweiten Führungseinrichtung zusammen, die im Bereich des Montageabschnitts der zweiten Trennplatte angeordnet ist. Durch das Zusammenwirken der ersten Führungseinrichtung mit der zweiten Führungseinrichtung werden die erste und die zweite Trennplatte im Bereich des in der ersten Trennplatte ausgebildeten Montageschlitzes bzw. im Bereich des Montageabschnitts der zweiten Trennplatte sicher miteinander verbunden.

Bei der erfindungsgemäßen Flugzeugbordküche umfasst die erste Trennplatte des Trennplattensystems ferner ebenfalls einen Montageabschnitt, der sich von einer Stirnfläche des in der ersten Trennplatte ausgebildeten Montageschlitzes in Richtung eines dem ersten Rand der ersten Trennplatte gegenüberliegenden zweiten Rands der ersten Trennplatte erstreckt. Der Montageabschnitt der ersten Trennplatte trägt eine dritte Führungseinrichtung, die mit einer komplementären vierten Führungseinrichtung zusammenwirkt. Die vierte Führungseinrichtung ist im Bereich einer dem Montageabschnitt der ersten Trennplatte zugewandten Seitenfläche der zweiten Trennplatte angeordnet. Mit anderen Worten, bei der erfindungsgemäßen Flugzeugbordküche werden die erste und die zweite Trennplatte auch im Bereich des Montageabschnitts der ersten Trennplatte bzw. im Bereich der dem Montageabschnitt der ersten Trennplatte zugewandten Seitenfläche der zweiten Trennplatte sicher miteinander verbunden.

Bei der erfindungsgemäßen Flugzeugbordküche ermöglicht das Design der Trennplatten und der zur Verbindung der Trennplatten genutzten Führungseinrichtungen eine optimierte Kraftübertragung zwischen den Trennplatten. Die Trennplatten können daher mit einer vergleichsweise geringen Dicke und damit vergleichsweise leichtgewichtig ausgeführt werden. Ferner erleichtern die Führungseinrichtungen die Montage des Trennplattensystems und damit der Flugzeugbordküche insgesamt. Eine besonders sichere Verbindung der Trennplatten und eine besonders einfache Montage der erfindungsgemäßen Flugzeugbordküchen ist dann möglich, wenn sich die erste und/oder die zweite Führungseinrichtung im wesentlichen über die gesamte Länge des Montageschlitzes der ersten Trennplatte und/oder die gesamte Länge des in dem Montageschlitz der ersten Trennplatte aufgenommenen Montageabschnitts der zweiten Trennplatte erstreckt/erstrecken. In ähnlicher Weise erstreckt/erstrecken sich die dritte und/oder die vierte Führungseinrichtung vorzugsweise über die gesamte Länge des Montageabschnitts der ersten Trennplatte bzw. die dem Montageabschnitt der ersten Trennplatte zugewandte Seitenfläche der zweiten Trennplatte.

Die erste und die zweite Trennplatte können eine im wesentlichen T-förmige Struktur bilden. Der Montageabschnitt der zweiten Trennplatte wird dann vorzugsweise durch einen Vorsprung gebildet, der sich benachbart zu der dem Montageabschnitt der ersten Trennplatte zugewandten Seitenfläche der zweiten Trennplatte in den in der ersten Trennplatte ausgebildeten Montageschlitz erstreckt.

In der zweiten Trennplatte kann jedoch ebenfalls mindestens ein Montageschlitz ausgebildet sein, der sich von einem ersten Rand der zweiten Trennplatte in Richtung eines Innenbereichs der zweiten Trennplatte erstreckt. Bei einer derartigen Anordnung wird die dem Montageabschnitt der ersten Trennplatte zugewandte Seitenfläche der zweiten Trennplatte durch eine erste Seitenfläche des in der zweiten Trennplatte ausgebildeten Montageschlitzes gebildet. Der Montageabschnitt der zweiten Trennplatte erstreckt sich dann von einer Stirnfläche des in der zweiten Trennplatte ausgebildeten Montageschlitzes in Richtung eines dem ersten Rand der zweiten Trennplatte gegenüberliegenden zweiten Rands der zweiten Trennplatte. Mit einem Trennplattensystem, das zwei mit einem Montageschlitz versehene Trennplatten umfasst, kann beispielsweise eine kreuzförmige Trennplattenanordnung realisiert werden.

Zur Verbesserung der Verbindung der ersten Trennplatte mit der zweiten Trennplatte trägt vorzugsweise sowohl die erste Seitenfläche des in der ersten Trennplatte ausgebildeten Montageschlitzes als auch eine der ersten Seitenfläche gegenüberliegende zweite Seitenfläche des in der ersten Trennplatte ausgebildeten Montageschlitzes eine erste Führungseinrichtung. Die beiden einander gegenüberliegenden ersten Führungseinrichtungen wirken vorzugsweise mit komplementären zweiten Führungseinrichtungen zusammen, die im Bereich des Montageabschnitts der zweiten Trennplatte im Bereich einer ersten Hauptoberfläche sowie einer der ersten Hauptoberfläche gegenüberliegenden zweiten Hauptoberfläche der zweiten Trennplatte angeordnet sind. Wenn nicht nur die erste Trennplatte, sondern auch die zweite Trennplatte des Trennplattensystems mit einem Montageschlitz versehen ist, trägt der Montageabschnitt der ersten Trennplatte vorzugsweise ferner zwei dritte Führungseinrichtungen, die im Bereich des Montageabschnitts der ersten Trennplatte im Bereich einer ersten Hauptoberfläche sowie einer der ersten Hauptoberfläche gegenüberliegenden zweiten Hauptoberfläche der ersten Trennplatte angeordnet sind. Die dritten Führungseinrichtungen wirken vorzugsweise mit zwei vierten Führungseinrichtungen zusammen, die von der ersten Seitenfläche des in der zweiten Trennplatte ausgebildeten Montageschlitzes sowie einer der ersten Seitenfläche gegenüberliegenden zweiten Seitenfläche des in der zweiten Trennplatte ausgebildeten Montageschlitzes getragen werden.

Der in der ersten Trennplatte ausgebildete Montageschlitz erstreckt sich vorzugsweise im wesentlichen senkrecht von dem ersten Rand der ersten Trennplatte in Richtung eines Innenbereichs der ersten Trennplatte. Zusätzlich oder alternativ dazu kann sich der in der zweiten Trennplatte ausgebildete Montageschlitz im wesentlichen senkrecht von dem ersten Rand der zweiten Trennplatte in Richtung des Innenbereichs der ersten Trennplatte erstrecken. Dadurch können die Trennplatten des Trennplattensystems in dem Grundkörper der Flugzeugbordküche würfelförmige oder quaderförmige Fächer definieren.

In einer bevorzugten Ausführungsform der erfindungsgemäßen Flugzeugbordküche erstreckt sich der in der ersten Trennplatte ausgebildete Montageschlitz von dem ersten Rand der ersten Trennplatte bis zu einer Mittelachse der ersten Trennplatte. Alternativ oder zusätzlich dazu kann sich der in der zweiten Trennplatte ausgebildete Montageschlitz von dem ersten Rand der zweiten Trennplatte bis zu einer Mittelachse der zweiten Trennplatte erstrecken. Eine derartige Ausgestaltung der Trennplatten ermöglicht eine besonders sichere Verbindung der Trennplatten, ohne dass eine Ausgestaltung der Trennplatten mit zu langen Montageschlitzen eine unerwünschte Beeinträchtigung der mechanischen Eigenschaften, d.h. der Tragfähigkeit der Trennplatten zur Folge hat.

Eine optimale Verbindung der Trennplatten des Trennplattensystems ist dann möglich, wenn die erste und die zweite Führungseinrichtung und/oder die dritte und die vierte Führungseinrichtung jeweils eine Schwalbenschwanzverbindung bilden. Zur Realisierung einer Schwalbenschwanzverbindung kann die erste Führungseinrichtung beispielsweise eine Schiene umfassen, die zur Aufnahme eines Schwalbenschwanzfortsatzes der zweiten Führungseinrichtung geeignet ist. Selbstverständlich ist es jedoch auch denkbar, die erste Führungseinrichtung mit einem Schwalbenschwanzfortsatz zu versehen, der in einer geeigneten Schiene der zweiten Führungseinrichtung aufgenommen ist. In ähnlicher Weise kann zur Realisierung einer Schwalbenschwanzverbindung die dritte Führungseinrichtung einen Schwalbenschwanzfortsatz aufweisen, der in einer entsprechend geformten Schiene der vierten Führungseinrichtung aufgenommen ist. Schließlich kann die vierte Führungseinrichtung einen Schwalbenschwanzfortsatz umfassen, der in einer entsprechen geformten Schiene der dritten Führungseinrichtung aufgenommen ist.

In der ersten und/oder der zweiten Trennplatte kann eine Mehrzahl von Montageschlitzen ausgebildet sein. Dadurch kann die Anzahl der Trennplatten, die in einer erfindungsgemäßen Flugzeugbordküche eingesetzt werden müssen, um den Grundkörper der Flugzeugbordküche in einzelne Fächer zu unterteilen, in vorteilhafter Weise reduziert werden.

Die erste und/oder die zweite Trennplatte kann/können eine im wesentlichen rechteckige Grundform aufweisen. Im Bereich mindestens eines Rands der ersten Trennplatte ist eine erste Verbindungseinrichtung zur Verbindung der ersten Trennplatte mit dem Grundkörper der Flugzeugbordküche vorgesehen. In ähnlicher Weise ist im Bereich mindestens eines Rands der zweiten Trennplatte eine zweite Verbindungseinrichtung zur Verbindung der zweiten Trennplatte mit dem Grundkörper der Flugzeugbordküche vorgesehen.

Die erste Verbindungseinrichtung der ersten Trennplatte umfasst mindestens einen Vorsprung, der in einer in dem Flugzeugbordküchengrundkörper, beispielsweise in einer Seitenwand oder einer Rückwand des Grundkörpers, ausgebildeten komplementären Ausnehmung aufgenommen ist. Alternativ dazu kann die erste Verbindungseinrichtung der ersten Trennplatte auch eine Ausnehmung umfassen, die einen an dem Grundkörper der Flugzeubordküche ausgebildeten Vorsprung aufnimmt. In ähnlicher Weise umfacill die zweite Verbindungseinrichtung der zweiten Trennplatte mindestens einen Vorsprung, der in einer in dem Flugzeugbordküchengrundkörper, beispielsweise einer Deckplatte oder einer Rückwand des Flugzeugbordküchengrundkörpers ausgebildeten komplementären Ausnehmung aufgenommen ist. Alternativ dazu kann die zweite Verbindungseinrichtung jedoch auch eine Ausnehmung umfassen, die einen an dem Grundkörper der Flugzeugbordküche ausgebildeten Vorsprung aufnimmt. Eine derartige Ausgestaltung der Trennplatten des Trennsystems ermöglicht in einem ersten Schritt die Montage des Trennplattensystems, bevor in einem zweiten Montageschritt einzelne Komponenten des Grundkörpers, wie z.B. Seitenwände und/oder eine Deckplatte des Grundkörpers mit den Trennplatten des Trennsystems verbunden werden können.

Die erste und/oder die zweite Trennplatte enthält/enthalten vorzugsweise ein faserverstärktes Material, wie z.B. ein faserverstärktes Polyetherimid (PEI)-Material. Ferner können die Trennplatten auch aus einem Sandwich-Material bestehen, das z.B. einen Kern mit einer Honigwabenstruktur oder einen geschäumten Kern umfasst. Das Sandwich-Material kann ein Phenolharzmaterial enthalten und/oder an den Kern können beispielsweise aus Aramidpapier bestehende Deckschichten angrenzen. Die Verstärkungsfasern können beispielsweise Kohlenstofffasern oder Glasfasern sein.

In dem Material der ersten und/oder der zweiten Trennplatte enthaltene Verstärkungsfasern sind vorzugsweise im wesentlichen parallel zu dem in der ersten und/oder der zweiten Trennplatte ausgebildeten Montageschlitz ausgerichtet. Mit anderen Worten, die in dem Material der ersten und/oder der zweiten Trennplatte enthaltenen Verstärkungsfasern weisen eine Vorzugsorientierung im wesentlichen parallel zu dem in der ersten und/oder der zweiten Trennplatte ausgebildeten Montageschlitz auf. Vorzugsweise sind mindestens 80 % der Verstärkungsfasern in dieser Vorzugsrichtung orientiert. Durch eine derartige Ausrichtung der Verstärkungsfasern werden die mechanischen Eigenschaften der Trennplatten verbessert.

Die erste und die zweite Trennplatte sind vorzugsweise so gestaltet, dass sie in dem Grundkörper der Flugzeugbordküche eine Mehrzahl von gleich großen Fächern definieren. Das Trennplattensystem der erfindungsgemäßen Bordküche kann, je nach Bedarf, mehrere erste und/oder mehrere zweite Trennplatten umfassen, die jeweils so gestaltet sein können, dass sie in dem Grundkörper der Flugzeugbordküche eine Mehrzahl von gleich großen Fächern definieren. Dadurch kann auf einfache Weise ein modularer Grundaufbau der erfindungsgemäßen Flugzeugbordküche realisiert werden. Gleichzeitig ermöglichen in gleichen Abständen zueinander angeordnete Trennplatten eine optimierte Lastübertragung zwischen den Trennplatten, so dass die Trennplatten bei gleicher Tragfähigkeit dünner und damit leichtgewichtiger gestaltet werden können.

Bei einem erfindungsgemäßen Verfahren zur Montage einer Flugzeugbordküche wird in einem ersten Schritt eine erste Trennplatte sowie eine zweite Trennplatte bereitgestellt, wobei in der ersten Trennplatte mindestens ein Montageschlitz ausgebildet ist, der sich von einem ersten Rand der ersten Trennplatte in Richtung eines Innenbereichs der ersten Trennplatte erstreckt. Die erste Trennplatte wird derart mit der zweiten Trennplatte verbunden, dass der in der ersten Trennplatte ausgebildete Montageschlitz einen Montageabschnitt der zweiten Trennplatte aufnimmt, wobei der in der ersten Trennplatte ausgebildete Montageschlitz und der Montageabschnitt der zweiten Trennplatte so gestaltet sind, dass Hauptoberflächen der ersten Trennplatte im wesentlichen senkrecht zu Hauptoberflächen der zweiten Trennplatte ausgerichtet werden. Eine von mindestens einer Seitenfläche des in der ersten Trennplatte ausgebildeten Montageschlitzes getragene erste Führungseinrichtung wirkt mit einer komplementären zweiten Führungseinrichtung zusammen, die im Bereich des Montageabschnitts der zweiten Trennplatte angeordnet ist. Ferner wirkt eine von einem Montageabschnitt der ersten Trennplatte, der sich von einer Stirnfläche des in der ersten Trennplatte ausgebildeten Montageschlitzes in Richtung eines dem ersten Rand der ersten Trennplatte gegenüberliegenden zweiten Rands der ersten Trennplatte erstreckt, getragene dritte Führungseinrichtung mit einer komplementären vierten Führungseinrichtung zusammen. Die vierte Führungseinrichtung ist im Bereich einer dem Montageabschnitt der ersten Trennplatte zugewandten Seitenfläche der zweiten Trennplatte angeordnet.

Vorzugsweise wird die erste Trennplatte derart mit der zweiten Trennplatte verbunden, dass ein in der zweiten Trennplatte ausgebildeter Montageschlitz, der sich von einem ersten Rand der zweiten Trennplatte in Richtung eines Innenbereichs der zweiten Trennplatte erstreckt, den Montageabschnitt der ersten Trennplatte aufnimmt.

Bei einer bevorzugten Ausführungsform des erfindungsgemäßen Verfahrens werden zunächst die Trennplatten miteinander verbunden. Anschließend werden Komponenten eines Grundkörpers der Flugzeugbordküche, beispielsweise Seitenwände und eine Rückwand des Flugzeugbordküchengrundkörpers mittels einer im Bereich mindestens eines Rands der ersten Trennplatte vorgesehenen ersten Verbindungseinrichtung mit der ersten Trennplatte verbunden. Ferner können weitere Komponenten des Flugzeugbordküchengrundkörpers, beispielsweise eine Deckplatte und die Rückwand mittels einer im Bereich mindestens eines Rands der zweiten Trennplatte vorgesehene zweiten Verbindungseinrichtung mit der zweiten Trennplatte verbunden werden.

Eine bevorzugte Ausführungsform der Erfindung wird nun anhand der beigefügten schematischen Zeichnungen näher erläutert, von denen
- Figur 1: eine schematische Querschnittsansicht einer Flugzeugbordküche zeigt,
- Figur 2: die Verbindung einer ersten und einer zweiten Trennplatte eines Trennplattensystems der Flugzeugbordküche gemäß Figur 1 zeigt,
- Figur 3: das in Figur 2 veranschaulichte Trennplattensystem im verbundenen Zustand zeigt,
- Figur 4: eine Detailquerschnittsansicht des Trennplattensystems gemäß Figur 3 im Bereich eines in der ersten Trennplatte ausgebildeten Montageschlitzes zeigt,
- Figur 5: eine Detailquerschnittsansicht des Trennplattensystems gemäß Figur 3 im Bereich eines Montageabschnitts der ersten Trennplatte zeigt,
- Figur 6: die Montage eines weiteren Trennplattensystems mit zwei ersten und zwei zweiten Trennplatten zeigt,
- Figur 7: eine Detailquerschnittsansicht des Trennplattensystems gemäß Figur 6 im Bereich eines in der ersten Trennplatte ausgebildeten Montageschlitzes zeigt,
- Figur 8: eine Detailquerschnittsansicht des Trennplattensystems gemäß Figur 6 im Bereich eines Montageabschnitts der ersten Trennplatte zeigt,
- Figur 9: eine Detailquerschnittsansicht eines alternativen Trennplattensystems im Bereich eines in einer ersten Trennplatte ausgebildeten Montageschlitzes zeigt und
- Figur 10: eine Detailquerschnittsansicht des Trennplattensystems gemäß Figur 9 im Bereich eines Montageabschnitts der ersten Trennplatte zeigt.

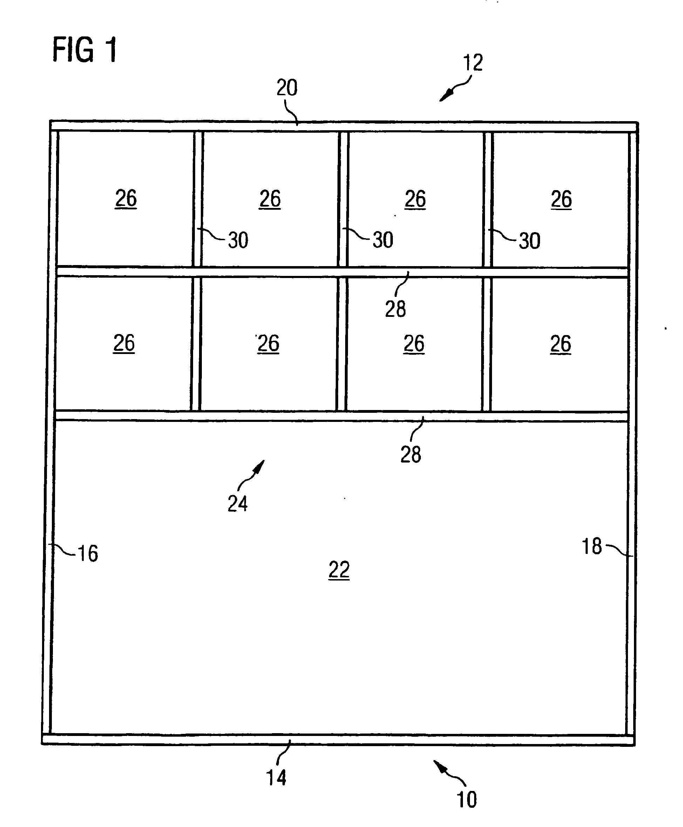

Figur 1 zeigt eine Flugzeugbordküche 10 mit einem Grundkörper 12. Der Flugzeugbordküchengrundkörper 12 umfasst eine Bodenplatte 14, zwei einander gegenüberliegende Seitenwände 16,18, eine Deckplatte 20 sowie eine Rückwand 22. Ein Trennplattensystem 24 unterteilt einen oberen Bereich des Flugzeugbordküchengrundkörpers 12 in eine Mehrzahl von gleich großen Fächern 26.

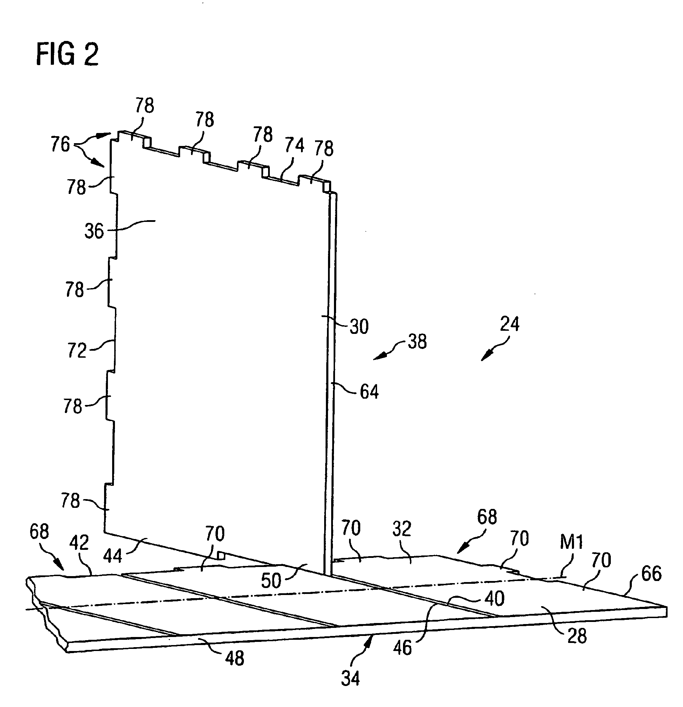

In den Figuren 2 bis 5 ist eine erste Ausführungsform eines in der Flugzeugbordküche 10 gemäß Figur 1 eingesetzten Trennplattensystems 24 veranschaulicht. Das Trennplattensystem 24 umfasst eine horizontal angeordnete erste Trennplatte 28 sowie eine im wesentlichen vertikal angeordnete zweite Trennplatte 30. Hauptoberflächen 32, 34 der ersten Trennplatte 28 sind somit im wesentlichen senkrecht zu Hauptoberflächen 36, 38 der zweiten Trennplatte 30 ausgerichtet. In der ersten Trennplatte 28 sind mehrere Montageschlitze 40 ausgebildet, die sich im wesentlichen parallel zueinander von einem ersten Rand 42 der ersten Trennplatte 40 in Richtung eines Innenbereichs der ersten Trennplatte 40 bis zu einer Mittelachse M1 der Trennplatte erstrecken. Die Montageschlitze 40 sind im wesentlichen senkrecht zu dem ersten Rand 42 der ersten Trennplatte 28 ausgerichtet. Jeder der in der ersten Trennplatte 28 ausgebildeten Montageschlitze 40 dient dazu, einen Montageabschnitt 44 aufzunehmen, der an einer entsprechenden zweiten Trennplatte 30 ausgebildet ist. Die Breite der in der ersten Trennplatte 28 ausgebildeten Montageschlitze ist daher an die Dicke des an einer jeden zweiten Trennplatte 30 ausgebildeten Montageabschnitts 44 angepasst.

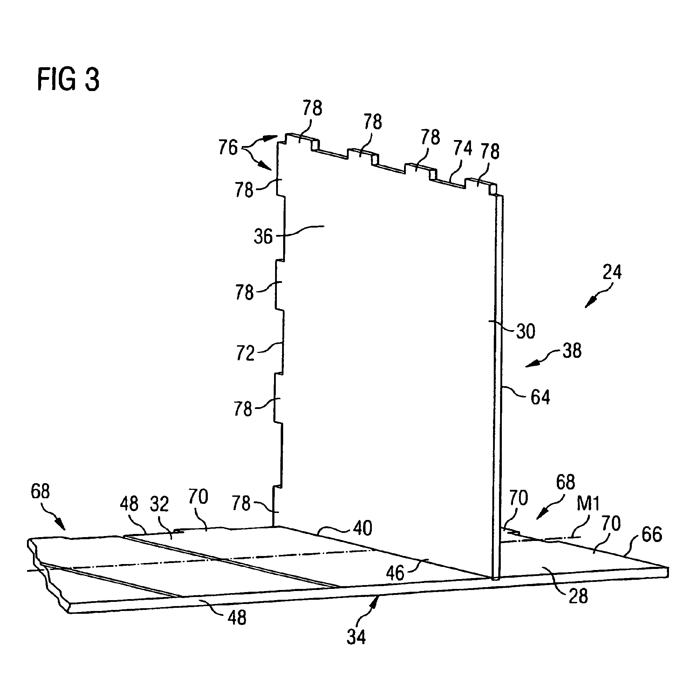

Ferner umfasst die erste Trennplatte 28 einen Montageabschnitt 46, der sich von einer Stirnfläche, d.h. einem geschlossenen Ende des in der ersten Trennplatte 28 ausgebildeten Montageschlitzes 40 in Richtung eines dem ersten Rand 42 der ersten Trennplatte 28 gegenüberliegenden Seitenrands 48 der ersten Trennplatte 28 erstreckt. In einem in Figur 3 veranschaulichten verbundenen Zustand des Trennplattensystems 24 wirkt der Montageabschnitt 46 der ersten Trennplatte 28 mit einer dem Montageabschnitt 46 der ersten Trennplatte 28 zugewandten Seitenfläche 50 der zweiten Trennplatte 30 zusammen. Der Montageabschnitt 44 der zweiten Trennplatte 30 wird durch einen Vorsprung gebildet, der sich benachbart zu der Seitenfläche 50 der zweiten Trennplatte 30 erstreckt, die im in Figur 3 veranschaulichten zusammengebauten Zustand des Trennplattensystems 24 dem Montageabschnitt 46 der ersten Trennplatte 28 zugewandt ist, d.h. mit dem Montageabschnitt 46 der ersten Trennplatte 28 zusammenwirkt.

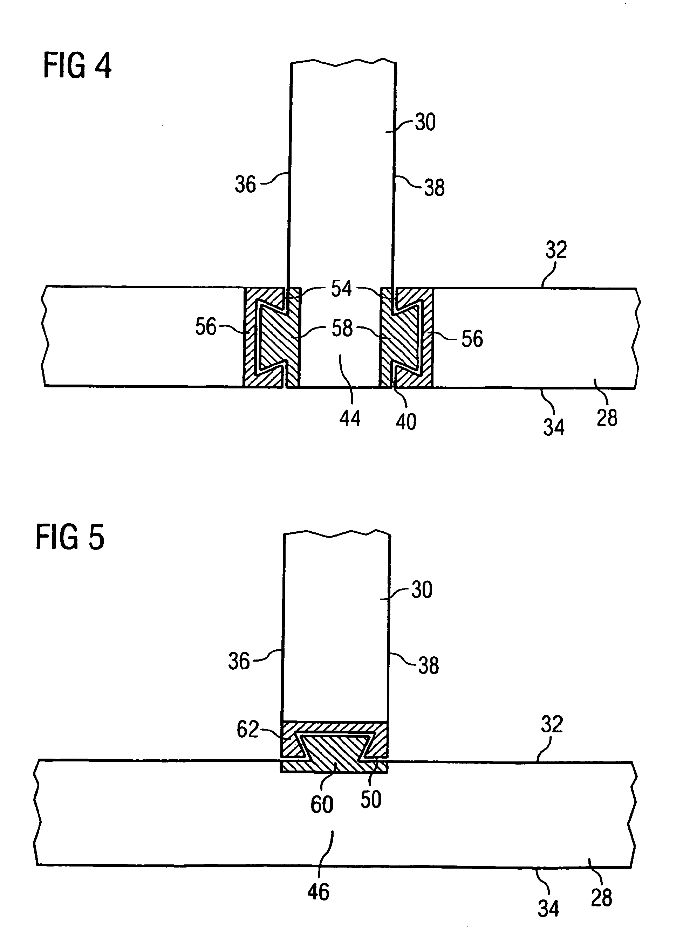

Wie in Figur 4 zu erkennen ist, wird der in der ersten Trennplatte 28 ausgebildete Montageschlitz 40 durch Seitenflächen 52, 54 begrenzt, die sich im wesentlichen parallel zueinander sowie senkrecht zu den Hauptflächen 32, 34 der ersten Trennplatte 28 erstrecken. Die Seitenflächen 52, 54 des Montageschlitzes 40 tragen jeweils eine in Form einer Schiene ausgebildete erste Führungseinrichtung 56. Jede der in Form einer Schiene ausgebildeten ersten Führungseinrichtungen 56 nimmt eine in Form eines Schwalbenschwanzfortsatzes ausgebildete zweite Führungseinrichtung 58 auf, die sich im Bereich des Montageabschnitts 44 der zweiten Trennplatte 30 von einer der Hauptflächen 36, 38 der zweiten Trennplatte 30 erstreckt.

Figur 5 veranschaulicht schließlich die Ausgestaltung der Verbindung zwischen der ersten Trennplatte 28 und der zweiten Trennplatte 30 im Bereich des Montageabschnitts 46 der ersten Trennplatte 28 sowie der Seitenfläche 50 der zweiten Trennplatte 30. Der Montageabschnitt 46 der ersten Trennplatte 28 trägt eine in Form eines Schwalbenschwanzfortsatzes ausgebildete dritte Führungseinrichtung 60. Die in Form eines Schwalbenschwanzfortsatzes ausgebildete dritte Führungseinrichtung 60 ist in einer in Form einer Schiene ausgebildeten komplementären vierten Führungseinrichtung 62 aufgenommen, die im Bereich der Seitenfläche 50 der zweiten Trennplatte 30 angeordnet ist. Die dritte und die vierte Führungseinrichtung 60, 62 bilden somit, ebenso wie die erste und die zweite Führungseinrichtung 56, 58, eine Schwalbenschwanzverbindung. Um eine optimale Verbindung der Trennplatten 28, 30 des Trennplattensystems 24 zu gewährleisten, erstrecken sich die erste Führungseinrichtung 56 und die zweite Führungseinrichtung 58 entlang der gesamten Länge des in der ersten Trennplatte 28 ausgebildeten Montageschlitzes 40 bzw. über die gesamte Länge des Montageabschnitts 44 der zweiten Trennplatte 30. Ebenso erstrecken sich die dritte und die vierte Führungseinrichtung 60, 62 über die gesamte Länge des Montageabschnitts 46 der ersten Trennplatte 28 bzw. über die gesamte Länge der Seitenfläche 50 der zweiten Trennplatte 30.

In der in den Figuren 4 und 5 veranschaulichten Anordnung sind die erste Führungseinrichtung 56, die zweite Führungseinrichtung 58, die dritte Führungseinrichtung 60 und die vierte Führungseinrichtung 62 in Form separater Bauteile ausgeführt, die an der ersten Trennplatte 28 bzw. der zweiten Trennplatte 30 befestigt sind. Alternativ dazu können alle Führungseinrichtungen 56, 58, 60, 62 oder ein Teil der Führungseinrichtungen 56, 58, 60, 62 jedoch auch integriert mit der ersten Trennplatte 28 bzw. der zweiten Trennplatte 30 ausgebildet sein. Ferner ist es denkbar, eine erste Führungseinrichtung in Form eines Schwalbenschwanzfortsatzes und eine zweite Führungseinrichtung in Form einer Schiene vorzusehen. In ähnlicher Weise kann die dritte Führungseinrichtung in Form einer Schiene und die vierte Führungseinrichtung in Form eines Schwalbenschwanzfortsatzes ausgeführt sein.

Wie am besten durch die Figuren 2 und 3 verdeutlicht wird, wird die zweite Trennplatte 30 mit der ersten Platte 28 verbunden, indem die zweite Trennplatte 30 derart relativ zu der ersten Trennplatte 28 verschoben wird, dass der in der ersten Trennplatte 28 ausgebildete Montageschlitz 40 den Montageabschnitt 44 der zweiten Trennplatte 30 aufnimmt. Ab der in Figur 2 veranschaulichten Position, in der ein erster Rand 64 der zweiten Trennplatte 30 mit einer Stirnfläche, d.h. einem geschlossenen Ende des in der ersten Trennplatte 28 ausgebildeten Montageschlitzes 40 fluchtet, wird die Verschiebung der zweiten Trennplatte 30 relativ zu der ersten Trennplatte 28 durch das Zusammenwirken der ersten Führungseinrichtung 56 mit der zweiten Führungseinrichtung 58 sowie das Zusammenwirken der dritten Führungseinrichtung 60 mit der vierten Führungseinrichtung 62 geführt.

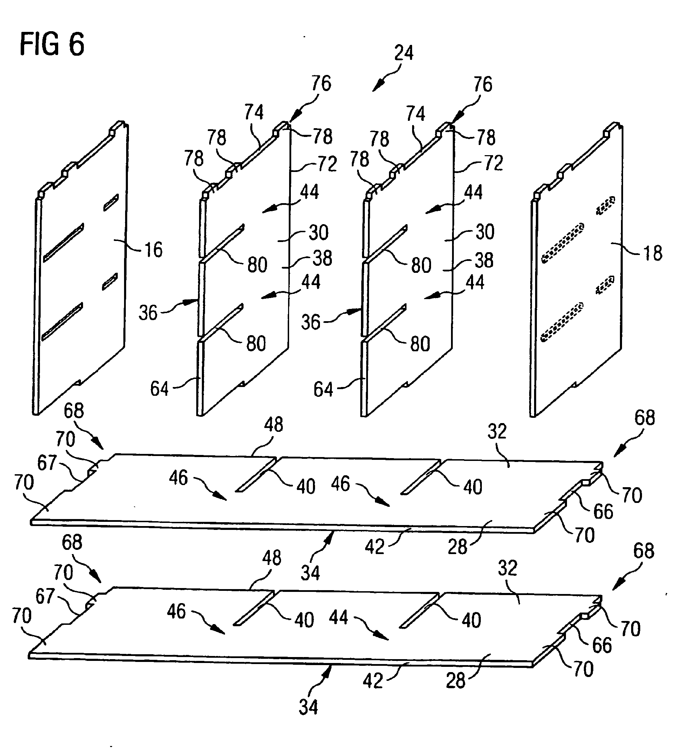

Im Bereich eines dritten Rand 66 der ersten Trennplatte 28 ist ebenso wie im Bereich eines in den Figuren 2 und 3 nicht gezeigten, aber in Figur 6 veranschaulichten vierten Rands 67 der ersten Trennplatte 28 eine erste Verbindungseinrichtung 68 vorgesehen, die eine Mehrzahl von Vorsprüngen 70 umfasst. In ähnlicher Weise trägt der zweite Rand 48 der ersten Trennplatte 28 eine erste Verbindungseinrichtung 68 mit einer Mehrzahl von Vorsprüngen 70. Die Vorsprünge 70 der ersten Verbindungseinrichtung 68 sind dazu vorgesehen, in komplementären Ausnehmungen aufgenommen zu werden, die in den Seitenwänden 16,18 sowie in der Rückwand 22 des Flugzeugbordküchengrundkörpers 12 ausgebildet sind.

In ähnlicher Weise ist im Bereich eines zweiten Rands 72 sowie eines dritten Rands 74 der zweiten Trennplatte 30 jeweils eine zweite Verbindungsvorrichtung 76 vorgesehen. Die zweite Verbindungsvorrichtung 76 umfasst eine Mehrzahl von Vorsprüngen 78. Die Vorsprünge 78 der im Bereich der zweiten Rands 72 der zweiten Trennplatte 30 angeordneten zweiten Verbindungsvorrichtung 76 sind dazu vorgesehen, in komplementären Ausnehmungen aufgenommen zu werden, die in der Rückwand 22 des Flugzeugbordküchengrundkörpers 12 ausgebildet sind. Die Vorsprünge 78 der im Bereich des dritten Rands 74 der zweiten Trennplatte 30 angeordneten zweiten Verbindungsvorrichtung 76 sind dagegen dazu vorgesehen, in komplementären Ausnehmungen aufgenommen zu werden, die in der Deckplatte 20 des Flugzeugbordküchengrundkörpers 12 vorgesehen sind. Bei der Montage der Flugzeugbordküche 10 können somit zunächst die Trennplatten 28, 30 des Trennplattensystems 24 wie beschrieben miteinander verbunden werden. Anschließend können die Seitenwände 16, 18 sowie die Deckplatte 20 und die Rückwand 22 des Flugzeugbordküchengrundkörpers 12 mit den Trennplatten 28, 30 des Trennplattensystems 24 verbunden werden.

Um die Flugzeugbordküche 10 mit hochbelastbaren, aber dennoch möglichst dünn ausgebildeten Trennplatten 28, 30 versehen zu können, enthalten die erste Trennplatte 28 und die zweite Trennplatte 30 des Trennplattensystems 24 ein faserverstärktes Material. Beispielsweise kann ein mit einem Kern in Form einer Honigwabenstruktur oder einem Schaumkem versehenes Material zum Einsatz kommen. In dem Material der ersten und der zweiten Trennplatte 28, 30 des Trennplattensystems 24 enthaltene Verstärkungsfasern weisen eine Vorzugsorientierung auf. Die in der ersten Trennplatte 28 enthaltenen Verstärkungsfasern sind im wesentlichen parallel zu dem in der ersten Trennplatte 28 ausgebildeten Montageschlitz 40 orientiert. Die in der zweiten Trennplatte 30 enthaltenen Verstärkungsfasern erstrecken sich dagegen im wesentlichen in einer Richtung senkrecht zu dem ersten und dem zweiten Rand 64, 72 der zweiten Trennplatte 30.

In den Figuren 6 bis 10 ist eine alternative Ausführungsform eines Trennplattensystems 24 veranschaulicht, das zwei erste Trennplatten 28 sowie zwei zweite Trennplatten 30 umfasst. Die zweiten Trennplatten 30 des Trennplattensystems 24 sind, ebenso wie die ersten Trennplatten 28, mit einer Mehrzahl von Montageschlitzen 80 versehen. Die Montageschlitze 80 der zweiten Trennplatten 30 erstrecken sich parallel zueinander und senkrecht zu dem ersten Rand 64 der zweiten Trennplatten 30 in Richtung eines Innenbereichs der zweiten Trennplatten 30 bis zu einer Mittelachse M2 der zweiten Trennplatten 30. Wenn eine erste Trennplatte 28 und eine zweite Trennplatte 30 des in den Figuren 6 bis 10 veranschaulichten Trennplattensystems 24 miteinander verbunden sind, ist der Montageabschnitt 46 der ersten Trennplatte 28 in einem in der zweiten Trennplatte 30 ausgebildeten Montageschlitz 80 aufgenommen. Mit anderen Worten, parallel zueinander und im wesentlichen senkrecht zu den Hauptoberflächen 36, 38 der zweiten Trennplatte 30 angeordnete Seitenflächen 82, 84 des in der zweiten Trennplatte 30 ausgebildeten Montageschlitzes 80 wirken mit dem Montageabschnitt 46 der ersten Trennplatte 28 zusammen.

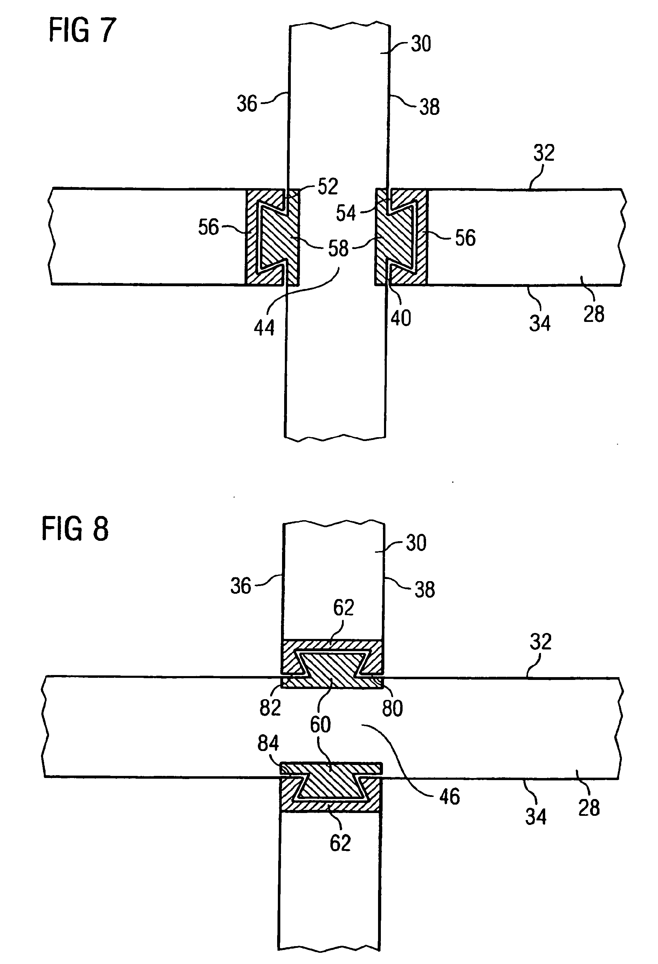

Ähnlich wie bei der in den Figuren 2 bis 5 veranschaulichten Anordnung tragen die Seitenflächen 52, 54 des in der ersten Trennplatte 28 ausgebildeten Montageschlitzes 40 jeweils eine in Form einer Schiene ausgebildete erste Führungseinrichtung 56. In jeder der entsprechend geformten schienenförmigen ersten Führungseinrichtungen 56 ist eine komplementäre zweite Führungseinrichtung 58 aufgenommen. Die zweiten Führungseinrichtungen 58 sind jeweils in Form eines Schwalbenschwanzfortsatzes ausgebildet und erstrecken sich im Bereich des Montageabschnitts 44 der zweiten Trennplatte 30 von den einander gegenüberliegenden Hauptoberflächen 36, 38 der zweiten Trennplatte 30 (siehe Figur 7).

Im Bereich ihres Montageabschnitts 46 ist die erste Trennplatte 28 mit zwei dritten Führungseinrichtungen 60 versehen. Die dritten Führungseinrichtungen 60 sind in Form eines Schwalbenschwanzfortsatzes ausgebildet und erstrecken sich im Bereich des Montageabschnitts 46 der ersten Trennplatte 28 von den einander gegenüberliegenden Hauptflächen 32, 34 der ersten Trennplatte 28. Jede der dritten Führungseinrichtungen 60 ist in einer komplementären vierten Führungseinrichtung 62 aufgenommen. Die vierten Führungseinrichtungen 62 sind jeweils in Form einer Schiene ausgebildet und im Bereich der Seitenflächen 82, 84 des in der zweiten Trennplatte 30 ausgebildeten Montageschlitzes 80 angeordnet. Um eine optimale Verbindung der Trennplatten 28, 30 des Trennplattensystems 24 zu ermöglichen, erstrecken sich die erste Führungseinrichtung 56 und die zweite Führungseinrichtung 58 über die gesamte Länge des in der ersten Trennplatte 28 ausgebildeten Montageschlitzes 40 bzw. über die gesamte Länge des Montageabschnitts 44 der zweiten Trennplatte 30. In ähnlicher Weise erstrecken sich die dritte Führungseinrichtung 60 und die vierte Führungseinrichtung 62 über die gesamte Länge des Montageabschnitts 46 der ersten Trennplatte 28 bzw. über die gesamte Länge des in der zweiten Trennplatte 30 ausgebildeten Montageschlitzes 80.

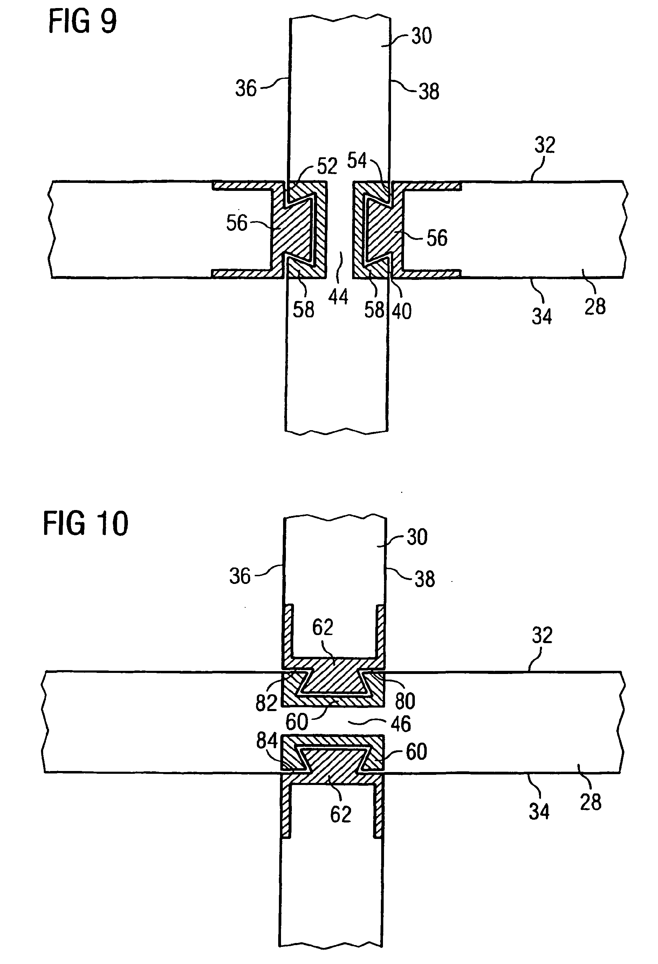

Die Figuren 9 und 10 zeigen eine alternative Ausführungsform der Führungseinrichtungen 56, 58, 60, 62 des Trennplattensystems gemäß Figur 6. Insbesondere zeigt Figur 9 eine Anordnung, bei der erste Führungseinrichtungen 56 in Form eines Schwalbenschwanzfortsatzes und komplementäre zweite Führungseinrichtungen 58 in Form einer Schiene ausgebildet sind. Schließlich veranschaulicht Figur 10 in Form einer Schiene ausgebildete dritte Führungseinrichtungen 60, die komplementäre, jeweils in Form eines Schwalbenschwanzfortsatzes ausgebildete vierte Führungseinrichtungen 62 aufnehmen.

Im übrigen entspricht der Aufbau und die Montage des Trennplattensystems 24 gemäß den Figuren 6 bis 10 dem Aufbau und der Montage des in den Figuren 2 bis 5 gezeigten Systems. Ferner versteht es sich, dass die Anordnung gemäß den Figuren 2 bis 5 in beliebiger Weise mit der in den Figuren 6 bis 10 gezeigten Anordnung in einem einzigen Trennplattensystem kombiniert werden kann.

## Patentansprüche

1. Flugzeugbordküche (10) mit einem Grundkörper (12), der mittels eines Trennplattensystems (24) in eine Mehrzahl von Fächern (26) unterteilt ist, wobei das Trennplattensystem (24) umfasst:
- eine erste Trennplatte (28) und
- eine zweite Trennplatte (30), wobei im Bereich mindestens eines Rands (42, 66, 67) der ersten Trennplatte (28) eine erste Verbindungseinrichtung (68) zur Verbindung der ersten Trennplatte (28) mit dem Grundkörper (12) der Flugzeugbordküche (10) vorgesehen ist und im Bereich mindestens eines Rands (72, 74) der zweiten Trennplatte (30) eine zweite Verbindungseinrichtung (76) zur Verbindung der zweiten Trennplatte (30) mit dem Grundkörper (12) der Flugzeugbordküche (10) vorgesehen ist, wobei die erste Verbindungseinrichtung (68) eine Mehuzahl von Vonsprüngen (70) umfasst, die in Komplementären Ansnehmungen in dem Ghundkörper (12) der Flugzeugbondküche aufgenommen sind, **dadurch gekennzeichnet, dass** in der ersten Trennplatte mindestens ein Montageschlitz (40) ausgebildet ist, der sich von einem ersten Rand (42) der ersten Trennplatte (28) in Richtung eines Innenbereichs der ersten Trennplatte (28) erstreckt und einen Montageabschnitt (44) der zweiten Trennplatte (30) aufnimmt, wobei der in der ersten Trennplatte (28) ausgebildete Montageschlitz (40) und der Montageabschnitt (44) der zweiten Trennplatte (30) so gestaltet sind, dass Hauptoberflächen (32, 34) der ersten Trennplatte (28) im Wesentlichen senkrecht zu Hauptoberflächen (36, 38) der zweiten Trennplatte (30) ausgerichtet sind, wobei mindestens eine Seitenfläche (52, 54) des in der ersten Trennplatte (28) ausgebildeten Montageschlitzes (40) eine erste Führungseinrichtung (56) trägt, die mit einer im Bereich des Montageabschnitts (44) der zweiten Trennplatte (30) angeordneten, komplementären zweiten Führungseinrichtung (58) zusammenwirkt, wobei ein Montageabschnitt (46) der ersten Trennplatte (28), der sich von einer Stirnfläche des in der ersten Trennplatte (28) ausgebildeten Montageschlitzes (40) in Richtung eines dem ersten Rand (42) der ersten Trennplatte (28) gegenüberliegenden zweiten Rands (48) der ersten Trennplatte (28) erstreckt, eine dritte Führungseinrichtung (60) trägt, die mit einer im Bereich einer dem Montageabschnitt (46) der ersten Trennplatte (28) zugewandten Seitenfläche (50; 82) der zweiten Trennplatte (30) angeordneten, komplementären vierten Führungseinrichtung (62) zusammenwirkt, wobei die zweite Verbindungseinrichtung (76) eine Mehrzahl von Vorsprüngen (78) umfass, die in komplementären Ausnehmungen in dem Grundkörper (12) der Flugzeugbordküche (10) aufgenommen sind.

2. Flugzeugbordküche nach Anspruch 1,
**dadurch gekennzeichnet, dass** der Montageabschnitt (44) der zweiten Trennplatte (30) durch einen Vorsprung gebildet wird, der sich benachbart zu der dem Montageabschnitt (46) der ersten Trennplatte (28) zugewandten Seitenfläche (50; 82) der zweiten Trennplatte (30) in den in der ersten Trennplatte (28) ausgebildeten Montageschlitz (40) erstreckt.

3. Flugzeugbordküche nach Anspruch 1 oder 2,
**dadurch gekennzeichnet, dass** in der zweiten Trennplatte (30) mindestens ein Montageschlitz (80) ausgebildet ist, der sich von einem ersten Rand (64) der zweiten Trennplatte (30) in Richtung eines Innenbereichs der zweiten Trennplatte (30) erstreckt, so dass die dem Montageabschnitt (46) der ersten Trennplatte (28) zugewandte Seitenfläche (50; 82) der zweiten Trennplatte (30) durch eine erste Seitenfläche (82) des in der zweiten Trennplatte (30) ausgebildeten Montageschlitzes (80) gebildet wird und sich der Montageabschnitt (44) der zweiten Trennplatte (30) von einer Stirnfläche des in der zweiten Trennplatte (30) ausgebildeten Montageschlitzes (80) in Richtung eines dem ersten Rand (64) der zweiten Trennplatte (30) gegenüberliegenden zweiten Rands (72) der zweiten Trennplatte (30) erstreckt.

4. Flugzeugbordküche nach einem der Ansprüche 1 bis 3,
**dadurch gekennzeichnet, dass** sich der in der ersten Trennplatte (28) ausgebildete Montageschlitz (40) im Wesentlichen senkrecht von dem ersten Rand (42) der ersten Trennplatte (28) in Richtung des Innenbereichs der ersten Trennplatte (28) erstreckt und/oder dass sich der in der zweiten Trennplatte (30) ausgebildete Montageschlitz (80) im Wesentlichen senkrecht von dem ersten Rand (64) der zweiten Trennplatte (30) in Richtung des Innenbereichs der zweiten trennplatte (30) erstreckt.

5. Flugzeugbordküche nach einem der Anspruche 1 bis 4,
**dadurch gekennzeichnet, dass** sich der in der ersten Trennplatte (28) ausgebildete Montageschlitz (40) von dem ersten Rand (42) der ersten Trennplatte (28) bis zu einer Mittelachse (M1) der ersten Trennplatte (28) erstreckt und/oder dass sich der in der zweiten Trennplatte (30) ausgebildete Montageschlitz (80) von dem ersten Rand (64) der zweiten Trennplatte (30) bis zu einer Mittelachse (M2) der zweiten Trennplatte (30) erstreckt

6. Flugzeugbordküche nach einem der Ansprüche 1 bis 5,
**dadurch gekennzeichnet, dass** die erste und die zweite Führungseinrichtung (56, 58) und/oder die dritte und die vierte Führungseinrichtung (60, 62) eine Schwalbenschwanzverbindung bilden.

7. Flugzeugbordküche nach einem der Ansprüche 1 bis 6,
**dadurch gekennzeichnet, dass** in der ersten und/oder in der zweiten Trennplatte (28, 30) eine Mehrzahl von Montageschlitzen (40, 80) ausgebildet ist.

8. Flugzeugbordküche nach einem der Ansprüche 1 bis 7,
**dadurch gekennzeichnet, dass** die erste und/oder die zweite Trennplatte (28, 30) ein faserverstärktes Material enthält/enthalten.

9. Flugzeugbordküche nach Anspruch 8,
**dadurch gekennzeichnet, dass** in dem Material der ersten und/oder der zweiten Trennplatte (28, 30) enthaltene Verstärkungsfasern im Wesentlichen parallel zu dem in der ersten und/oder der zweiten Trennplatte (28, 30) ausgebildeten Montageschlitz (40, 80) ausgerichtet sind.

10. Flugzeugbordküche nach einem der Ansprüche 1 bis 9,
**dadurch gekennzeichnet, dass** die erste und die zweite Trennplatte (28, 30) so gestaltet sind, dass sie in dem Grundkörper (12) der Flugzeugbordküche (10) eine Mehrzahl von gleich großen Fächern (26) definieren.

11. Verfahren zur Montage einer Flugzeugbordküche (10) mit den Schritten:
- Bereitstellen einer erste Trennplatte (28) und einer zweiten Trennplatte (30), **dadurch gekennzeichnet, dass** in der ersten Trennplatte (28) mindestens ein Montageschlitz (40) ausgebildet ist, der sich von einem ersten Rand (42) der ersten Trennplatte (28) in Richtung eines Innenbereichs der ersten Trennplatte (28) erstreckt, wobei das Verfahren ferner umfasst:
- Verbinden der ersten Trennplatte (28) mit der zweiten Trennplatte (30) derart, dass der in der ersten Trennplatte (28) ausgebildete Montageschlitz (40) einen Montageabschnitt (44) der zweiten Trennplatte (30) aufnimmt, wobei der in der ersten Trennplatte (28) ausgebildete Montageschlitz (40) und der Montageabschnitt (44) der zweiten Trennplatte (30) so gestaltet sind, dass Hauptoberflächen (32, 34) der ersten Trennplatte (28) im Wesentlichen senkrecht zu Hauptoberflächen (36, 38) der zweiten Trennplatte (30) ausgerichtet werden, wobei eine von mindestens einer Seitenfläche (52, 54) des in der ersten Trennplatte (28) ausgebildeten Montageschlitzes (40) getragene erste Führungseinrichtung (56) mit einer im Bereich des Montageabschnitts (44) der zweiten Trennplatte (30) angeordneten, komplementären zweiten Führungseinrichtung (58) zusammenwirkt, wobei eine von einem Montageabschnitt (46) der ersten Trennplatte (28), der sich von einer Stirnfläche des in der ersten Trennplatte (28) ausgebildeten Montageschlitzes (40) in Richtung eines dem ersten Rand (42) der ersten Trennplatte (28) gegenüberliegenden zweiten Rands (48) der ersten Trennplatte (28) erstreckt, getragene dritte Führungseinrichtung (60) mit einer im Bereich einer dem Montageabschnitt (46) der ersten Trennplatte (28) zugewandten Seitenfläche (50; 82) der zweiten Trennplatte (30) angeordneten, komplementären vierten Führungseinrichtung (62) zusammenwirkt, und wobei Komponenten (16, 18, 20, 22) eines Grundkörpers (12) der Flugzeugbordküche (10) mittels einer im Bereich mindestens eines Rands (42, 66, 67) der ersten Trennplatte (28) vorgesehenen ersten Verbindungseinrichtung (68) und/oder einer im Bereich mindestens eines Rands (72, 74) der zweiten Trennplatte (30) vorgesehenen zweiten Verbindungseinrichtung (76) mit der ersten und/oder der zweiten Trennplatte (28, 30) verbunden werden.

12. Verfahren nach Anspruch 11,
**dadurch gekennzeichnet, dass** die erste Trennplatte (28) derart mit der zweiten Trennplatte (30) verbunden wird, dass ein in der zweiten Trennplatte (30) ausgebildeter Montageschlitz (80), der sich von einem ersten Rand (64) der zweiten Trennplatte (30) in Richtung eines Innenbereichs der zweiten Trennplatte (30) erstreckt, den Montageabschnitt (46) der ersten Trennplatte (28) aufnimmt.

## Claims

1. Aircraft galley (10) having a base body (12) which is divided into a plurality of compartments (26) by a partition panel system (24), the partition panel system (24) comprising:
- a first partition panel (28), and
- a second partition panel (30), wherein there is provided in the region of at least one edge (42, 66, 67) of the first partition panel (28) a first connecting device (68) for connecting the first partition panel (28) to the base body (12) of the aircraft galley (10) and there is provided in the region of at least one edge (72, 74) of the second partition panel (30) a second connecting device (76) for connecting the second partition panel (30) to the base body (12) of the aircraft galley (10), wherein the first connecting device (68) comprises a plurality of projections (70) which are received in complementary recesses formed in the base body (12) of the aircraft galley (10),
**characterized in that** in the first partition panel there is formed at least one assembly slot (40) which extends from a first edge (42) of the first partition panel (28) in the direction of an inner region of the first partition panel (28), and receives an assembly section (44) of the second partition panel (30), the assembly slot (40) formed in the first partition panel (28) and the assembly section (44) of the second partition panel (30) being designed such that main surfaces (32, 34) of the first partition panel (28) are oriented substantially perpendicularly to main surfaces (36, 38) of the second partition panel (30), at least one lateral surface (52, 54) of the assembly slot (40) formed in the first partition panel (28) carrying a first guide device (56) which interacts with a complementary second guide device (58) arranged in the region of the assembly section (44) of the second partition panel (30), wherein an assembly section (46) of the first partition panel (28), which extends from an end face of the assembly slot (40) formed in the first partition panel (28) in the direction of a second edge (48) of the first partition panel (28) opposite the first edge (42) of the first partition panel (28), carries a third guide device (60) which interacts with a complementary fourth guide device (62) arranged in the region of a lateral surface (50; 82) of the second partition panel (30) facing the assembly section (46) of the first partition panel (28), wherein the second connecting device (76) comprises a plurality of projections (70, 78) which are received in complementary recesses formed in the base body (12) of the aircraft galley (10).

2. Aircraft galley according to Claim 1,
**characterised in that** the assembly section (44) of the second partition panel (30) is formed by a projection which extends adjacently to the lateral surface (50; 82) of the second partition panel (30) facing the assembly section (46) of the first partition panel (28) into the assembly slot (40) formed in the first partition panel (28).

3. Aircraft galley according to Claim 1 or 2,
**characterised in that** there is formed in the second partition panel (30) at least one assembly slot (80) which extends from a first edge (64) of the second partition panel (30) in the direction of an inner region of the second partition panel (30), so that the lateral surface (50; 82) of the second partition panel () facing the assembly section (46) of the first partition panel (28) is formed by a first lateral surface (82) of the assembly slot (80) formed in the second partition panel (30) and the assembly section (44) of the second partition panel (30) extends from an end face of the assembly slot (80) formed in the second partition panel (30) in the direction of a second edge (72) of the second partition panel (30) opposite the first edge (64) of the second partition panel (30).

4. Aircraft galley according to one of Claims 1 to 3,
**characterised in that** the assembly slot (40) formed in the first partition panel (28) extends substantially perpendicularly from the first edge (42) of the first partition panel (28) in the direction of the inner region of the first partition panel (28) and/or in that the assembly slot (80) formed in the second partition panel (30) extends substantially perpendicularly from the first edge (64) of the second partition panel (30) in the direction of the inner region of the second partition panel (30).

5. Aircraft galley according to one of Claims 1 to 4,
**characterised in that** the assembly slot (40) formed in the first partition panel (28) extends from the first edge (42) of the first partition panel (28) up to a centre axis (M1) of the first partition panel (28) and/or **in that** the assembly slot (80) formed in the second partition panel (30) extends from the first edge (64) of the second partition panel (30) up to a centre axis (M2) of the second partition panel (30).

6. Aircraft galley according to one of Claims 1 to 5,
**characterised in that** the first and the second guide device (56, 58) and/or the third and the fourth guide device (60, 62) form a dovetail joint.

7. Aircraft galley according to one of Claims 1 to 6,
**characterised in that** a plurality of assembly slots (40, 80) are formed in the first and/or in the second partition panel (28, 30).

8. Aircraft galley according to one of Claims 1 to 7,
**characterised in that** the first and/or the second partition panel (28, 30) contain(s) a fibre-reinforced material.

9. Aircraft galley according to Claim 8,
**characterised in that** reinforcing fibres contained in the material of the first and/or the second partition panel (28, 30) are oriented substantially parallel to the assembly slot (40, 80) formed in the first and/or the second partition panel (28, 30).

10. Aircraft galley according to one of Claims 1 to 9,
**characterised in that** the first and the second partition panel (28, 30) are designed such that they define a plurality of equal-size compartments (26) in the base body (12) of the aircraft galley (10).

11. Method for assembly of an aircraft galley (10) having the steps:
- providing a first partition panel (28) and a second partition panel (30), **characterized in that** there is formed in the first partition panel (28) at least one assembly slot (40) which extends from a first edge (42) of the first partition panel (28) in the direction of an inner region of the first partition panel (28), wherein the method further comprises:
- connecting the first partition panel (28) to the second partition panel (30) in such a manner that the assembly slot (40) formed in the first partition panel (28) receives an assembly section (44) of the second partition panel (30), the assembly slot (40) formed in the first partition panel (28) and the assembly section (44) of the second partition panel (30) being designed such that main surfaces (32, 34) of the first partition panel (28) are oriented substantially perpendicularly to main surfaces (36, 38) of the second partition panel (30), wherein a first guide device (56) carried by at least one lateral surface (52, 54) of the assembly slot (40) formed in the first partition panel (28) interacts with a complementary second guide device (58) arranged in the region of the assembly section (44) of the second partition panel (30), wherein a third guide device (60) carried by an assembly section (46) of the first partition panel (28), which extends from an end face of the assembly slot (40) formed in the first partition panel (28) in the direction of a second edge (48) of the first partition panel (28) opposite the first edge (42) of the first partition panel (28), interacts with a complementary fourth guide device (62) arranged in the region of a lateral surface (50; 82) of the second partition panel (30) facing the assembly section (46) of the first partition panel (28), and wherein components (16, 18, 20, 22) of a base body (12) of the aircraft galley (10) are connected to the first and/or the second partition panel (28, 30) by means of a first connecting device (68) provided in the region of at least one edge (42, 66, 67) of the first partition panel (28) and/or a second connecting device (76) provided in the region of at least one edge (72, 74) of the second partition panel (30).

12. Method according to Claim 11,
**characterised in that** the first partition panel (28) is connected to the second partition panel (30) in such a manner that an assembly slot (80) formed in the second partition panel (30) and extending from a first edge (64) of the second partition panel (30) in the direction of an inner region of the second partition panel (30) receives the assembly section (46) of the first partition panel (28).

## Revendications

1. Cuisine de bord pour avion (10) pourvue d'un corps de base (12) subdivisé en plusieurs casiers (26) à l'aide d'un système de plaques de séparation (24), lequel système (24) comprend :
- une première plaque de séparation (28) et
- une deuxième plaque de séparation (30), un premier dispositif d'assemblage (68) étant prévu dans la zone au moins d'un bord (42, 66, 67) de ladite première plaque de séparation (28) pour assembler cette dernière audit corps de base (12) de la cuisine de bord pour avion (10) et, dans la zone au moins d'un bord (72, 74) de ladite deuxième plaque de séparation (30), un deuxième dispositif d'assemblage pour assembler cette dernière au corps de base (12) de la cuisine de bord pour avion (10), le premier dispositif d'assemblage (68) comportant plusieurs saillies (70) logées dans des évidements complémentaires ménagés dans le corps de base (12) de la cuisine de bord pour avion, **caractérisée en ce qu'**est réalisée dans la première plaque de séparation au moins une fente de montage (40) qui s'étend du premier bord (42) de la première plaque de séparation (28) en direction d'une zone intérieure de la première plaque de séparation (28) et reçoit un segment de montage (44) de la deuxième plaque de séparation (30), la fente de montage (40) réalisée dans la première plaque de séparation (28) et ledit segment de montage (44) de la deuxième plaque de séparation (30) étant conçus de telle sorte que des surfaces principales (32, 34) de la première plaque de séparation (28) sont orientées pour l'essentiel perpendiculairement aux surfaces principales (36, 38) de la deuxième plaque de séparation (30), au moins une face latérale (52, 54) de la fente de montage (40) réalisée dans la première plaque de séparation (28) portant un premier dispositif de guidage (56) qui coopère avec un deuxième dispositif de guidage complémentaire (58) situé dans la zone du segment de montage (44) de la deuxième plaque de séparation (30), un segment de montage (46) de la première plaque de séparation (28), lequel s'étend depuis une face frontale de la fente de montage (40) réalisée dans la première plaque de séparation (28) en direction d'un deuxième bord (48) de la première plaque de séparation (28) opposé au premier bord (42) de la première plaque de séparation (28), portant un troisième dispositif de guidage (60) qui coopère avec un quatrième dispositif complémentaire (62) situé dans la zone d'une face latérale (50 ; 82) de la deuxième plaque de séparation (30) tournée vers le segment de montage (46) de la première plaque de séparation (28), ledit deuxième dispositif d'assemblage (76) comprenant plusieurs saillies (78) logées dans des évidements complémentaires ménagés dans le corps de base (12) de la cuisine de bord pour avion (10).

2. Cuisine de bord pour avion selon la revendication 1,
**caractérisée en ce que** le segment de montage (44) de la deuxième plaque de séparation (30) est réalisée sous la forme d'une saillie qui, voisine de la face latérale (50 ; 82) de la deuxième plaque de séparation (30) tournée vers le segment de montage (46) de la première plaque de séparation (28), s'étend dans la fente de montage (40) réalisée dans la première plaque de séparation (28).

3. Cuisine de bord pour avion selon la revendication 1 ou 2,
**caractérisée en ce qu'**est réalisée dans la deuxième plaque de séparation (30) au moins une fente de montage (80) qui s'étend depuis un premier bord (64) de la deuxième plaque de séparation (30) en direction d'une zone intérieure de cette dernière si bien que la face latérale (50 ; 82) de la deuxième plaque de séparation (30) tournée vers le segment de montage (46) de la première plaque de séparation (28) est formée par une première face latérale (82) de la fente de montage (80) réalisée dans la deuxième plaque de séparation (30) et le segment de montage (44) de la deuxième plaque de séparation (30) s'étend d'une face frontale de la fente de montage (80) réalisée dans la deuxième plaque de séparation (30) en direction d'un deuxième bord (72) de la deuxième plaque de séparation (30) opposé audit premier bord (64) de cette dernière.

4. Cuisine de bord pour avion selon l'une des revendications 1 à 3,
**caractérisée en ce que** la fente de montage (40) réalisée dans la première plaque de séparation (28) s'étend pour l'essentiel perpendiculairement du premier bord (42) de la première plaque de séparation (28) en direction de la zone intérieure de la première plaque de séparation (28) et/ou **en ce que** la fente de montage (80) réalisée dans la deuxième plaque de séparation (30) s'étend pour l'essentiel perpendiculairement du premier bord (64) de la deuxième plaque de séparation (30) en direction de la zone intérieure de la deuxième plaque de séparation (30).

5. Cuisine de bord pour avion selon l'une des revendications 1 à 4,
**caractérisée en ce que** la fente de montage (40) réalisée dans la première plaque de séparation (28) s'étend du premier bord (42) de la première plaque de séparation (28) jusqu'à un axe médian (M1) de la première plaque de séparation (28) et/ou **en ce que** la fente de montage (80) réalisée dans la deuxième plaque de séparation (30) s'étend du premier bord (64) de la deuxième plaque de séparation (30) jusqu'à un plan médian (M2) de la deuxième plaque de séparation (30).

6. Cuisine de bord pour avion selon l'une des revendications 1 à 5,
**caractérisée en ce que** le premier et le second dispositif de guidage (56, 58) et/ou le troisième et le quatrième dispositif de guidage (60, 62) forment un assemblage à queue d'aronde.

7. Cuisine de bord pour avion selon l'une des revendications 1 à 6,
**caractérisée en ce que** plusieurs fentes de montage (40, 80) sont réalisées dans la première et/ou dans la deuxième plaque de séparation (28, 30).

8. Cuisine de bord pour avion selon l'une des revendications 1 à 7,
**caractérisée en ce que** la première et/ou la deuxième plaque de séparation (28, 30) contient/contiennent un matériau renforcé par fibres.

9. Cuisine de bord pour avion selon la revendication 8,
**caractérisée en ce que** les fibres de renforcement contenues dans le matériau de la première et/ou de la deuxième plaque de séparation (28, 30) sont orientées pour l'essentiel parallèlement à la fente de montage (40, 80) réalisée dans la première et/ou la deuxième plaque de séparation (28, 30).

10. Cuisine de bord pour avion selon l'une des revendications 1 à 9,
**caractérisée en ce que** la première et la deuxième plaque de séparation (28, 30) sont conçues de telle sorte qu'elles définissent une pluralité de casiers (26) de taille égale dans le corps de base (12) de la cuisine de bord pour avion (10).

11. Procédé permettant le montage d'une cuisine de bord pour avion (10) et comportant les étapes suivantes :
- mise à disposition d'une première plaque de séparation (28) et d'une deuxième plaque de séparation (30), **caractérisé en ce qu'**est réalisée dans la première plaque de séparation (28) au moins une fente de montage (40) qui s'étend du premier bord (42) de la première plaque de séparation (28) en direction d'une zone intérieure de la première plaque de séparation (28), ce procédé comportant en outre :
- l'assemblage de la première plaque de séparation (28) avec la deuxième plaque de séparation (30) de telle sorte que la fente de montage (40) réalisée dans la première plaque de séparation (28) reçoit un segment de montage (44) de la deuxième plaque de séparation (30), la fente de montage (40) réalisée dans la première plaque de séparation (28) et le segment de montage (44) de la deuxième plaque de séparation (30) étant conçus de telle sorte que des surfaces principales (32, 34) de la première plaque de séparation (28) sont orientées pour l'essentiel perpendiculairement aux surfaces principales (36, 38) de la deuxième plaque de séparation (30), un premier dispositif de guidage (56) porté par au moins une face latérale (52, 54) de la fente de montage (40) réalisée dans la première plaque de séparation (28) coopérant avec un deuxième dispositif de guidage complémentaire (58) situé dans la zone du segment de montage (44) de la deuxième plaque de séparation (30), un troisième dispositif de guidage (60) porté par un segment de montage (46) de la première plaque de séparation (28), lequel segment s'étend d'une face frontale de la fente de montage (40) réalisée dans la première plaque de séparation (28) en direction d'un deuxième bord (48) de la première plaque de séparation (28) opposé au premier bord (42) de cette dernière, coopérant avec un quatrième dispositif de guidage complémentaire (62) situé dans la zone d'une face latérale (50 ; 82) de la deuxième plaque de séparation (30) tournée vers le segment de montage (46) de la première plaque de séparation (28), et des composants (16, 18, 20, 22) d'un corps de base (12) de la cuisine de bord pour avion (10) étant assemblés avec la première et/ou la deuxième plaque de séparation (28, 30) au moyen d'un premier dispositif d'assemblage (68) prévu dans la zone au moins d'un bord (42, 66, 67) de la première plaque de séparation (28) et/ou d'un deuxième dispositif d'assemblage (76) prévu dans la zone au moins d'un bord (72, 74) de la deuxième plaque de séparation (30).

12. Cuisine de bord pour avion selon la revendication 11,
**caractérisée en ce que** la première plaque de séparation (28) est assemblée de telle sorte à la deuxième plaque de séparation (30) qu'une fente de montage (80) réalisée dans la deuxième plaque de séparation (30), laquelle fente s'étend d'un premier bord (64) de la deuxième plaque de séparation (30) en direction d'une zone intérieure de la deuxième plaque de séparation (30), reçoit le segment de montage (46) de la première plaque de séparation (28).
